# EUROPEAN PATENT APPLICATION

(11) **EP 2 465 952 A1**
(43) Date of publication of application: **20.06.2012**
(21) Application number: 11192102.9
(22) Date of filing: 06.12.2011
(51) Int. Cl.: C21D 1/20, C21D 5/00, C22C 37/04

(54) **Method of producing large components form austempered ductile iron alloys**

(30) Priority: 16.12.2010 US 969803
(71) Applicant: General Electric Company, Schenectady, NY 12345 (US)
(72) Inventor: Parolini, Jason Robert, Greenville, SC South Carolina 29615 (US); Bouse, Gregory Keith, Greenville, SC South Carolina 29615 (US); Thangirala, Subrahmanyam, Schenectady, NY New York 12345 (US); Thomason, Scott Denton, Greenville, SC South Carolina 29615 (US); Park, Junyoung, Greenville, SC South Carolina 29615 (US)
(74) Representative: Szary, Anne Catherine

(57) **Abstract**

A method by which properties of a component (18) formed of a ductile iron alloy and having thick sections can be promoted with an austempering process. The method entails casting a ductile iron alloy containing iron, carbon, silicon and alloying constituents. The casting is solidified at a rate that inhibits segregation of the alloying constituents to grain boundaries of the casting, and so that the casting contains graphite nodules having a count of greater than 100 nodules per mm². The casting is then austempered by heating to an austenitization temperature to yield a microstructure having a single-phase matrix of austenite that contains carbon, and then quenching the casting to an austempering temperature. The casting is held at the austempering temperature for a duration sufficient to yield a microstructure whose matrix is mostly ausferrite and essentially free of martensite and pearlite.

## Description

### BACKGROUND OF THE INVENTION

The present invention generally relates to the production of components from ductile iron alloys. More particularly, this invention relates to a process capable of producing relatively large components that are cast from ductile iron alloys, in which the components exhibit desirable combinations of strength and toughness, for example, suitable for a main shaft of a wind turbine.

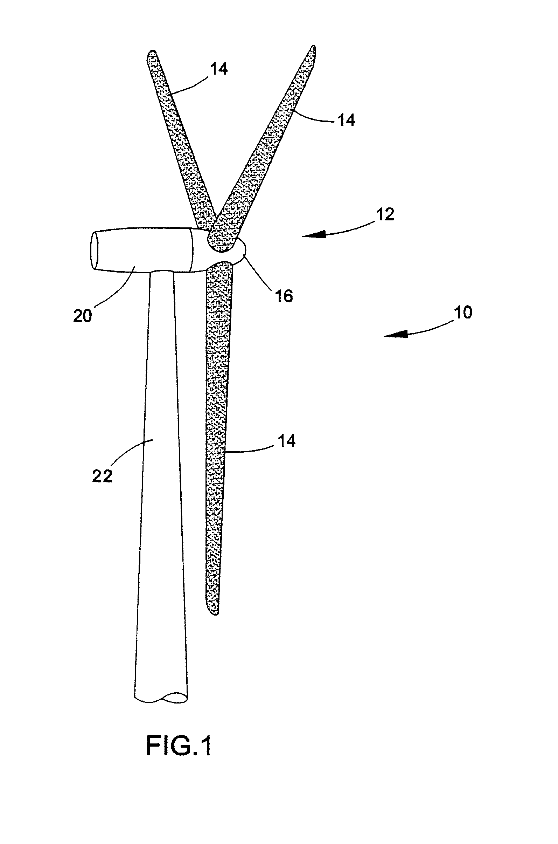

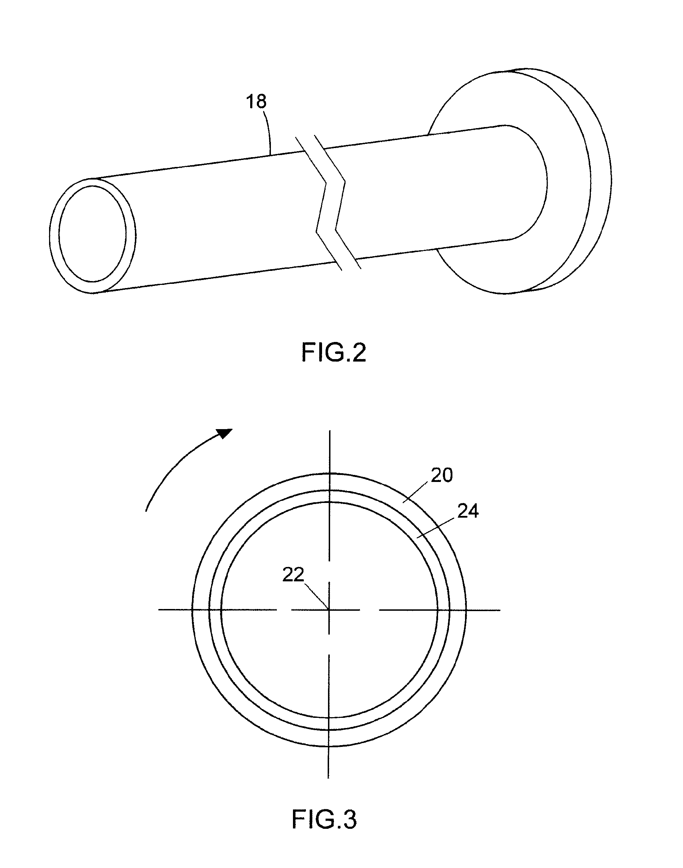

FIG. 1 schematically represents a wind turbine 10 as generally including a rotor blade assembly 12 comprising multiple blades 14 radially extending from a hub 16. The hub 16 is typically mounted on a main shaft 18, schematically represented in FIG. 2, which forms part of a drive train connected to an electric generator. The main shaft 18, drive train and generator are all housed within a nacelle 20 mounted on a tower 22. Depending on the size of the turbine 10, the main shaft 18 may be quite large, with main flange diameters on the order of about 135 centimeters or more. Because the main shaft 18 must operate in cold weather and withstand a significant amount of bending and torque induced by the action of wind on the blades 14, the shaft 18 benefits from having a balance of strength and toughness.

Various alloys have been considered and used to produce large shafts of the type represented by the main shaft 18. As an example, forged steels are commonly used for main shafts in wind turbine applications. Due to their strength, toughness, and machinability, ductile iron (cast nodular iron) alloys have also been used to produce wind turbine main shafts. Typical production methods for these shafts have included conventional sand casting. However, these main shafts typically have section thicknesses of less than fifteen centimeters, and are not subject to the demanding service requirements of more recent wind turbine designs. As larger main shafts become required for wind turbine applications, their design requirements for strength and toughness have exceeded the capability of conventional ductile iron alloys. Austempering is a heat treatment process performed on ferrous alloys to increase strength and toughness. The alloy is heated to an austenitic condition and then cooled to an austempering temperature at a sufficiently rapid rate to avoid the formation of pearlite. For example, the austenitization step may entail heating a casting to a temperature of about 1500°F to about 1800°F (about 815°C to about 980°C), and then holding the casting at this temperature for a time sufficient to fully saturate the austenite with carbon to produce a single-phase matrix microstructure of austenite (face-centered cubic (FCC) phase, or gamma (γ) iron) with a constant carbon content determined by selection of the austenitizing temperature. Thereafter, the casting undergoes a direct quench to the austempering temperature. Austempering is performed at an intermediate temperature, typically about 450°F to about 750°F (about 230°C to about 400°C), most often in a modified salt bath, and held at the austempering temperature for a sufficient time to produce the desired structural transformation and yield a matrix of ferrite and austenite stabilized with approximately two percent carbon. The austempering temperature is above the martensite start temperature and therefore avoids the formation of martensite.

The microstructure resulting from austempering depends on the particular composition of the alloy. In cast irons including ductile iron alloys, the microstructure contains ausferrite, a two-phase microconstituent composed of a fine acicular ferrite in a ductile, high-carbon stabilized austenite matrix. Notably, ausferrite is responsible for desirable properties attainable in austempered ductile iron (ADI) for use in a variety of applications. For example, U.S. Patent Nos. 4,484,953, 4,880,477, 5,028,281 and 5,139,579 disclose austempered ductile iron alloys and applications for their use, including camshafts for internal combustion engines.

However, there are certain prerequisites for successfully austempering ductile iron alloys. Following the casting operation but prior to austempering, there should be minimal chemical microsegregation to eutectic cell boundaries (which are the last-to-freeze regions of the casting), and a sufficient graphite nodule count should be present (for example, greater than 100 nodules per mm²). The inability to meet these criteria once solidification is complete makes it difficult or impossible to achieve a matrix that is entirely ausferrite, with the result that some regions of the casting form undesirable phases during the solid-state austempering heat treatment. Similar to thermal processing of steels, alloying additions of nickel, molybdenum, manganese and copper are often employed with ductile iron to tailor the transformation kinetics to allow for through-hardening during the austempering heat treatment. However, elements such as molybdenum and manganese segregate strongly to grain boundaries during solidification, especially in thick sections where solidification times are long and chemical partitioning is high. The graphite structure in ductile iron is essentially frozen once solidification is complete, and substantial changes in size, shape and distribution of graphite do not occur during cooling in the solid-state.

Unfortunately, with increasing section thicknesses of a ductile iron casting, the governing aspects of solidification behavior in ductile iron dictate an increase in the degree of chemical segregation and a decrease in number of graphite nodules. The result is an incomplete microstructural transformation and insufficient carbon enrichment of the austenite during austempering heat treatments, leading to the formation of extremely brittle phases including martensite in the last-to-freeze regions on cooling to room temperature. Additionally, pearlite develops in heavy sections with inadequate cooling from the austenitization temperature to the austempering temperature. Factors such as quench medium, iron chemistry and nodule count determine the requisite critical cooling rate. Consequently, through-hardening of ductile iron castings having section thicknesses of greater than about 2.5 inches (about 6.4 cm) has been difficult to achieve with austempering, and austempered ductile iron castings have been limited to components with relatively thin sections, such as the aforementioned camshafts of the prior art, and austempering of larger ductile iron castings of the size required for the main shaft of a wind turbine has not been successful in yielding a matrix that is mostly ausferrite and essentially free of brittle phases and pearlite. As used herein, "mostly ausferrite" means an ausferrite content in the matrix of more than 85 percent by volume, and "essentially free" means a content of less than 5 percent by volume.

### BRIEF DESCRIPTION OF THE INVENTION

The present invention provides a method by which properties of a component formed of a ductile iron alloy, for example, strength and toughness, can be promoted with an austempering process. The method is capable of achieving desired properties in the component, even if the component has a section thickness that exceeds, for example, ten centimeters.

The method entails casting a ductile iron alloy to produce a casting. The ductile iron alloy contains iron, carbon, silicon and alloying constituents, and the casting is solidified at a rate that minimizes or inhibits segregation of the alloying constituents to grain boundaries of the casting. Furthermore, the casting is solidified at a rate sufficient to develop graphite nodules characterized by a graphite nodule count of greater than 100 nodules per mm². The casting is then austempered by heating the casting to an austenitization temperature for a sufficient duration to yield a microstructure having a single-phase matrix of austenite that contains carbon, and then quenching the casting in a quenching medium to cool the casting from the austenitization temperature to an austempering temperature that is above a martensite start temperature of the ductile iron alloy to avoid formation of martensite and pearlite in the casting. The casting is held at the austempering temperature for a duration sufficient to yield a microstructure whose matrix is mostly ausferrite and essentially free of martensite and pearlite, thereby promoting ductility and toughness.

Other aspects of the invention include components produced by the method described above, and machines and structures that use the component. A particular but nonlimiting example is a main shaft of a wind turbine.

A technical effect of this invention is the ability to austemper a ductile iron casting having a section thickness that is greater than what could previously be austempered with ductile iron components to yield a microstructure whose matrix is entirely ausferrite and does not contain undesirable transformation products, particularly brittle phases such as martensite. This capability is believed to be attributable to casting a melt of the ductile iron alloy in such a manner as to produce a casting having the aforementioned graphite nodule count and minimal microsegregation of alloying constituents to the grain boundaries of the casting. With the ability to austemper relatively large ductile iron castings, the capability is provided for producing large ductile iron components that exhibit a combination of strength and toughness that can be, under appropriate conditions, comparable to a quenched and tempered steel forging.

Other aspects and advantages of this invention will be better appreciated from the following detailed description.

### BRIEF DESCRIPTION OF THE DRAWINGS

FIGS. 1 and 2 schematically depict a wind turbine and main shaft, respectively, and represent a particular application for austempered ductile iron castings of the present invention.
FIG. 3 schematically represents a cross-sectional view of a centrifugal casting process for initially producing a fine-grained casting of the main shaft of FIG. 2.
FIG. 4 is a graph representing an austempering treatment that can be performed on a main shaft casting produced by the centrifugal casting process represented in FIG. 3.

### DETAILED DESCRIPTION OF THE INVENTION

The present invention will be described in reference to the wind turbine 10 of FIG. 1, and in particular to a main shaft 18 of the wind turbine 10 of the type represented in FIG. 2. More specifically, the invention will be described in reference to a process for producing the main shaft 18 from a ductile iron alloy, though it should be understood that the invention is also well suited for the production of a wide variety of components from ductile iron alloys. Other nonlimiting examples include automotive components such as cylinder liners, railroad components such as car wheels, and various other components used in the automotive, railroad, construction, mining and agricultural industries. Such components are well known in the art and therefore require no further description.

With reference to FIG. 2, the shaft 18 is represented as having a tubular shape with a flange formed at one end, though it can be appreciated that FIG. 2 is merely a schematic representation and different configurations for the shaft 18 are also within the scope of the invention. The shaft 18 has an axisymmetric geometry with respect to the longitudinal axis of rotation of the shaft 18. For use in the wind turbine 10, the main shaft 18 will have an outer diameter well in excess of 20 inches (about 50 cm), and more typically in excess of 24 inches (about 60 cm), with a typical range being about 25 to 60 inches (about 63 to about 152 cm), though lesser and greater diameters are also foreseeable. In addition, the shaft 18 will typically have a section thickness in excess of 2.5 inches (about 6.4 cm), and more typically in excess of 4 inches (about 10 cm), with a typical range being about 6 to 8 inches (about 15 to 20 cm), though lesser and greater diameters are again foreseeable. Other aspects of the shaft 18, including its installation in the wind turbine 10 and the operation of the turbine 10 are otherwise known in the art, and therefore will not be discussed here in any detail.

If the shaft 18 were to be cast of a ductile iron alloy, section thicknesses of the type described above have traditionally been too great to permit an austempering treatment that is capable of achieving a complete microstructural transformation that yields a fully ausferritic matrix and avoids brittle phases such as martensite. However, according to a preferred aspect of the invention, previous limitations on the effectiveness of an austempering treatment performed on a ductile iron alloy can be overcome by initially producing the casting of the shaft 18 to have a refined grain microstructure, a high graphite nodule count, and minimal microsegregation of the alloying constituents to the grain boundaries of the casting.

A wide variety of ductile iron alloys can be processed in accordance with this invention to contain typical alloying constituents for ductile iron, for example, carbon, silicon and manganese and optionally copper, nickel and/or molybdenum, with the balance iron and incidental impurities such as chromium, phosphorus, sulfur, etc. Particular ranges for some of these constituents include, by weight, about 3.0% to about 3.9% carbon, about 1.9% to about 2.7% silicon, up to 0.3% manganese, up to 0.8% copper, up to 0.2% nickel, up to 0.05% chromium, up to 0.02% vanadium, up to 0.01% sulfur, and up to 0.3% molybdenum, with the balance iron and incidental impurities. As known in the art, the level for carbon is necessary for graphite formation and castability considerations. The role of silicon is generally to promote the formation of graphite instead of metastable iron carbide during solidification. The carbon content separates as spheroidal graphite during solidification, primarily as the result of the presence of silicon. The spheroidal graphite imparts such desirable properties as high strength and toughness for which ductile iron alloys are known. Molybdenum can be included to increase ausferrite hardenability and retard pearlite formation in austempered ductile irons. Manganese can be included to scavenge sulfur, which is preferably absent from the alloy but is usually unavoidably present as an impurity. For castings having a relatively thick section, such as the main shaft 18, phosphorus is considered detrimental because it counteracts the effects of molybdenum. Therefore, phosphorous levels are preferably kept at levels as low as possible, for example, below 0.1 weight percent. Also in heavy section castings such as the shaft 18, relatively high levels of copper, nickel and molybdenum may be necessary for ausferrite hardenability considerations, for example, toward the upper ends of their above-stated ranges. Generally, preferred alloy additions and their relative amounts can be balanced to achieve sufficient hardenability for a given section size, while minimizing alloy segregation, levels and cost.

In order to obtain a refined grain microstructure, high graphite nodule count, and minimal microsegregation of the alloying constituents to grain boundaries, a melt of the ductile iron alloy can be cast using a rapid solidification process, which as used herein refers to a process capable of solidifying a melt of a ductile iron alloy at a rate sufficient to obtain a high graphite nodule count. As an example, suitable rapid solidification processes achieve a graphite nodule count of greater than 100 per square millimeter, more preferably, about 150 to about 300 per square millimeter. Such cooling rates are also capable of achieving a refined grain size throughout the casting and minimizing the microsegregation of alloying constituents to the grain boundaries of the casting. An acceptable level of microsegregation is indicated by achieving a nodule count above 100 per square millimeter and a matrix that is essentially free of martensite and pearlite, in other words, martensite and pearlite contents of less than 5 volume percent in the matrix. On the other hand, excessive microsegregation at eutectic cell boundaries can be indicated by a low nodule count and high pearlite fractions if the cooling rate to the austempering temperature is insufficient, or by a low nodule count and an excessive martensite content (above 5 volume percent) and a low ausferrite content (below 85 volume percent) in the matrix due to insufficient stabilization of austenite during the isothermal austempering.

Centrifugal casting is a notable example of a rapid solidification casting technique. As known in the art, centrifugal casting generally entails dispensing a melt of an alloy inside a cylindrical-shaped mold 20 that is rotating about its longitudinal axis 22, as represented in FIG. 3. The mold 20 is rotated at a sufficient speed to ensure that the molten alloy 24 is forced radially outward against the interior surface of the mold 20, where the alloy rapidly solidifies to achieve a fine-grained casting as a result of the alloy being rapidly chilled by the mold 20. Advantageously, the rapid solidification process also promotes a high graphite nodule count due to increased nucleation and slow growth of graphite, as well as limits the opportunity for segregation of alloying constituents to grain boundaries. Suitable rotational speeds for the mold 20 will vary depending on, for example, the inner diameter of the mold 20 and the thickness desired for the casting.

Because of the rotation of the mold 20, castings produced by centrifugal casting techniques are generally axisymmetric. In the past, centrifugal cast ductile iron components were typically limited to noncritical applications having an axisymmetric geometry, such as piping for municipal water supplies, sewage lines, etc., which would not typically be viewed as candidates for an austempering treatment. However, the present invention utilizes the fine microstructures that can be developed during rapid solidification of centrifugal cast components to obtain the desired properties of the main shaft 18. It should be noted that other casting techniques capable of achieving rapid solidification rates are also within the scope of the invention, including permanent mold and sand casting techniques that have been modified to achieve the high solidification rates necessary to obtain the refined microstructure, reduced degree of microsegregation, and high graphite nodule counts required by this invention, which in turn yields the desired response during austempering, namely, a matrix that is mostly ausferrite and essentially free of martensite and pearlite, and more preferably a complete ausferrite transformation and the absence of brittle phases such as martensite. However, it should be noted that conventional permanent mold and sand casting techniques are not capable of achieving sufficiently rapid solidification rates for use with the present invention, particularly in view of the above-noted section thicknesses desired for the main shaft 18.

Prior to undergoing the austempering treatment, the casting may be annealed for example, at a temperature of at about 450°C to about 750°C, for a duration sufficient to eliminate any carbides and/or pearlite and provide a uniform carbon content in the matrix. A suitable annealing treatment is believed to be about 2 to about 10 hours, though lesser and greater durations are also within the scope of the invention to achieve both stress relief and annealing.

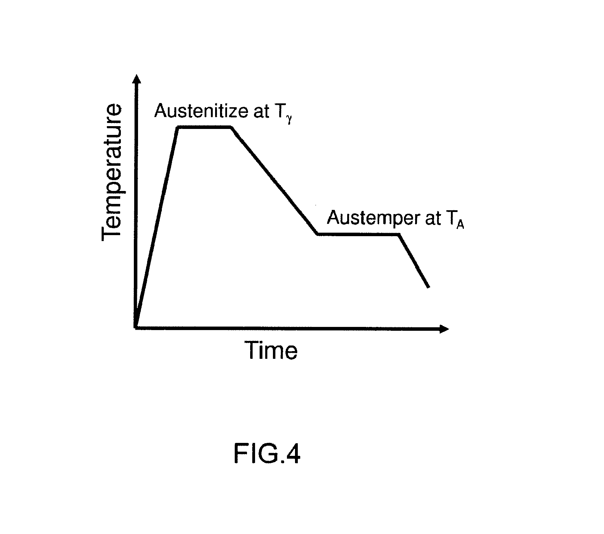

Following casting and, if used, the optional anneal, a ductile iron casting undergoes an austempering heat treatment cycle that, as represented in FIG. 4, includes heating to an austenitization temperature (T_{γ}) for a duration sufficient to yield a microstructure having a single-phase matrix of austenite that contains carbon. Such a treatment may entail heating to an austenitization temperature of about 815°C to about 980°C, and holding the casting at the austenitization temperature for a duration of about one to about three hours. Thereafter, the casting is directly quenched in a suitable quenching medium to cool the casting from the austenitization temperature to an austempering temperature (T_{A}). As known in the art, the austempering temperature is above the martensite start temperature of the ductile iron alloy to avoid formation of martensite in the casting. A suitable austempering temperature for use with this invention is believed to be in a range of about 230°C to about 400°C, and the austempering temperature may be held for a duration of about one to about four hours, though greater and lesser temperatures and durations are also foreseeable. At the austempering temperature, the casting undergoes an ausferrite transformation in which the parent austenite (FCC γ-iron) is transformed to ferrite (BCC α-iron) and a high carbon stabilized austenite. In general, a high austemper temperature will promote fatigue strength and ductility, while a low austemper temperature will promote strength and wear resistance. Accordingly, the austemper temperature can be chosen to promote certain properties of the main shaft 18, depending on its particular requirements.

The importance of the quench method and quench rate should also be noted here. The equipment used to cool the casting from the austenitization temperature to the austempering temperature can be optimized to promote the kinetics of the austempering process and promote a complete transformation across the entire section thickness, thereby limiting the propensity to form brittle phases. In particular, the equipment preferably promotes a more efficient heat transfer from the casting to the quench medium, which is typically a salt bath. Therefore, modifications and alternatives to a conventional salt bath could be employed to potentially promote the ausferrite transformation. Such modifications and alternatives may also be able to compensate for shortcomings of the casting process that resulted in one or more of the preferred characteristics (refined grain microstructure, high graphite nodule count, and minimal microsegregation) being incompletely met. In any event, the casting is quenched fast enough to avoid pearlite formation, for example, at a rate of at least 5.5°C/minute. Minimum quench rates will depend in part on how much nickel, molybdenum, copper, etc., are present in the alloy.

Following the austempering soak, the casting can be allowed to cool to room temperature. The resulting austempered casting is characterized by being through-hardened and having a microstructure made up of a matrix that is mostly if not entirely ausferrite and generally if not entirely free of martensite and pearlite. If a centrifugal casting process is used to form the casting, the casting will tend to have a finer grain structure at its interface with the mold 20, which advantageously promotes the austempering response near the outer circumferential surface of the casting during the austempering heat treatment. As a result, desired mechanical properties for the casting, including strength and toughness, can be more readily achieved near the outer circumferential surface of the main shaft 18, where higher structural requirements are typically necessary.

A main shaft 18 produced in accordance with the above is believed to be capable of exhibiting strength-toughness combinations that can rival low alloy steels, while offering such potential advantages as better wear resistance and better vibration and noise damping, along with the potential for weight reduction and cost savings. The machinability of the austempered through-hardened shaft 18 is likely comparable to a heat treated steel. However, the shaft 18 is also likely to exhibit a smaller and more predictable growth compared to a shaft of similar size and design produced by a quench and tempering operation. As a result, dimensional changes that occur during austempering can be accurately predicted to limit the amount of final machining operations necessary. As such, the majority of machining can be performed immediately after casting while the casting is still relatively soft.

While the invention has been described in terms of a preferred embodiment, it is apparent that other forms could be adopted by one skilled in the art. Therefore, the scope of the invention is to be limited only by the following claims.

## Claims

1. A method of producing a component (18), the method comprising:
casting a ductile iron alloy containing iron, carbon, silicon and alloying constituents to produce a casting having a section thickness, the casting being solidified at a rate that inhibits segregation of the alloying constituents and so that the casting contains graphite nodules **characterized by** a graphite nodule count of greater than 100 nodules per mm²; and then
austempering the casting by heating the casting to an austenitization temperature for a sufficient duration to yield a microstructure having a single-phase matrix of austenite that contains carbon, and then quenching the casting in a quenching medium to cool the casting from the austenitization temperature to an austempering temperature that is above a martensite start temperature of the ductile iron alloy to avoid formation of martensite and pearlite in the casting, the casting being held at the austempering temperature for a duration sufficient to yield a microstructure that has a matrix of mostly ausferrite and is essentially free of martensite and pearlite.

2. The method according to claim 1, wherein the casting step is a rapid solidification casting technique.

3. The method according to claim 1 or claim 2, wherein the casting step is a centrifugal casting technique that comprises dispensing a melt of the ductile iron alloy inside a cylindrical-shaped mold rotating about an axis thereof, and the casting is axisymmetric.

4. The method according to any preceding claim, wherein the casting has a nodule count of about 150 to about 300 nodules per mm² following the casting step.

5. The method according to any preceding claim, wherein the casting has a section thickness of at least ten centimeters.

6. The method according to any preceding claim, wherein the austenitization temperature is in a range of about 815°C to about 980°C.

7. The method according to any preceding claim, wherein the casting is held at the austenitization temperature for a duration of about one to about three hours.

8. The method according to any preceding claim, wherein the austempering temperature is in a range of about 230°C to about 400°C.

9. The method according to any preceding claim, wherein the casting is quenched at a rate of at least 5.5°C/minute during the austempering step.

10. The method according to any preceding claim, further comprising the step of annealing the casting at a temperature of about 450°C to about 750°C for a duration sufficient to eliminate any carbides or pearlite in the casting.

11. The method according to any preceding claim, wherein the ductile iron alloy contains, by weight, about 3.0% to about 3.9% carbon, about 1.9% to about 2.7% silicon, up to 0.3% manganese, up to 0.8% copper, up to 0.2% nickel, up to 0.05% chromium, up to 0.02% vanadium, up to 0.01% sulfur, and up to 0.3% molybdenum, and the balance iron and incidental impurities.

12. The method according to any preceding claim, wherein the component (18) is a main shaft (18) of a wind turbine (10), an automotive component, or a construction component, or a mining component, or a railroad component, or an agricultural component.

13. The method according to claim 12, wherein the main shaft (18) is hollow and has an outer diameter of at least 135 centimeters.

14. The method according to claim 12 or claim 13, further comprising the step of installing the main shaft (18) in a wind turbine (10) to couple a rotor blade assembly of the wind turbine (10) to a generator of the wind turbine (10).

15. The component (18) produced by the method of any preceding claim.
